(19) Europäisches Patentamt / European Patent Office / Office européen des brevets

(11) **EP 3 700 731 B1**

(12) **FASCICULE DE BREVET EUROPEEN**

(45) Date de publication et mention de la délivrance du brevet:
**30.11.2022   Bulletin 2022/48**

(21) Numéro de dépôt: **18789639.4**

(22) Date de dépôt: **19.10.2018**

(51) Classification Internationale des Brevets (IPC):
**B29C 48/35** (2019.01)   **B29C 48/18** (2019.01)
**B29C 48/49** (2019.01)   **B29C 48/12** (2019.01)
**B29C 48/21** (2019.01)   **B29C 48/30** (2019.01)
**B29C 48/305** (2019.01)   B29K 7/00 (2006.01)
B29K 21/00 (2006.01)   B29L 30/00 (2006.01)

(52) Classification Coopérative des Brevets (CPC):
**B29C 48/49; B29C 48/12; B29C 48/21;**
**B29C 48/30; B29C 48/307; B29C 48/35;**
B29C 48/07; B29K 2007/00; B29K 2021/00;
B29L 2030/002

(86) Numéro de dépôt international:
**PCT/EP2018/078679**

(87) Numéro de publication internationale:
**WO 2019/081362 (02.05.2019 Gazette 2019/18)**

(54) **TETE D'EXTRUSION D'UN PROFILE COMPLEXE FORME DE PROFILES JUXTAPOSES**

KOPF ZUM EXTRUDIEREN EINES KOMPLEXEN PROFILS AUS NEBENEINANDERLIEGENDEN PROFILEN

HEAD FOR EXTRUDING A COMPLEX PROFILE SECTION FORMED FROM JUXTAPOSED PROFILE SECTIONS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **27.10.2017   FR 1760146**

(43) Date de publication de la demande:
**02.09.2020   Bulletin 2020/36**

(73) Titulaire: **Compagnie Générale des Etablissements Michelin**
**63000 Clermont-Ferrand (FR)**

(72) Inventeurs:
• **ROUBY, Mickael**
  **63040 Clermont-Ferrand CEDEX 9 (FR)**

• **RABHI, Mohamed**
  **63040 Clermont-Ferrand CEDEX 9 (FR)**

(74) Mandataire: **Redouté, Gilles Pierre**
**M. F. P. Michelin**
**Service juridique - Propriété Intellectuelle**
**DCJ/PI - F35 - Site de Ladoux**
**23, place des Carmes-Déchaux**
**63040 Clermont-Ferrand Cedex 9 (FR)**

(56) Documents cités:
**EP-A1- 0 005 077      EP-A2- 0 201 337**
**WO-A1-2017/109392    KR-B1- 101 405 064**

**Description**

L'invention se situe dans le domaine de l'extrusion d'une bande profilée continue d'un matériau à base de caoutchouc, destinée en particulier à la fabrication des pneumatiques.

Plus précisément, l'invention concerne l'extrusion de profilés complexes composés de l'assemblage de plusieurs profilés, réalisés à partir de mélanges de caoutchouc non vulcanisés de compositions différentes. Ces profilés complexes sont obtenus à l'aide d'une machine de coextrusion mettant en œuvre plusieurs extrudeuses débouchant dans une voûte de mise en pression, et comprenant plusieurs lames de profilage disposées en amont d'une lame de profilage aval dans l'entrefer de laquelle s'effectue la mise en joint finale des différents profilés.

Ces profilés complexes sont utilisés en particulier pour la réalisation des bandes de roulement.

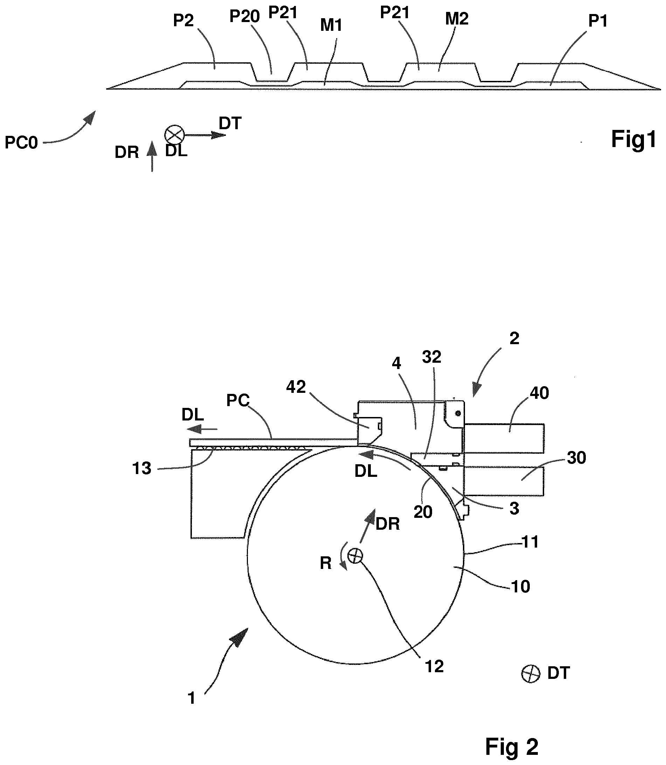

La coupe transversale d'un profilé complexe PC0, couramment mis en œuvre dans l'industrie des pneumatiques, est illustrée à la figure 1. Un premier profilé radialement interne P1 formé d'un mélange M1 constitue la sous-couche, un second profilé P2, formé d'un mélange M2 préfigure la bande de roulement destinée à venir en contact avec le sol. Des rainures longitudinales P20, préfigurant les sillons longitudinaux du pneumatique, sont placées entre des cordons longitudinaux P21 dans lesquels sont moulés les pains formant la sculpture finale du pneumatique.

Au cours de l'assemblage d'une ébauche de pneumatique, on coiffe l'ébauche de pneumatique en forme de tore d'un tronçon de bande prélevé dans une bande continue obtenue à l'aide de la machine de coextrusion. Les caractéristiques du préambule de la revendication 1 sont divulguées, par exemple, dans WO2017109392 A1.

Il est également connu d'utiliser des machines comprenant une tête de coextrusion pour réaliser des profils complexes comprenant un insert localisé. Ces machines ont été développées à l'apparition des mélanges à base de silice faiblement conducteurs de l'électricité pour répondre au problème d'écoulement des charges électriques du véhicule.

Ainsi, la publication EP1448355 décrit une machine de coextrusion comportant un rouleau et une tête d'extrusion comprenant au moins deux canaux d'écoulement d'un mélange caoutchouteux de sous-couche et d'un mélange caoutchouteux de bande de roulement, lesdits canaux débouchant sur un orifice d'extrusion au travers duquel sont refoulés les deux mélanges caoutchouteux de sous-couche et de bande de roulement.

La tête d'extrusion comprend également une micro-extrudeuse d'un troisième mélange caoutchouteux, électriquement conducteur, munie à son extrémité d'une buse, traversant les deux canaux d'écoulement, de sorte que le troisième mélange caoutchouteux électriquement conducteur est inséré dans les mélanges caoutchouteux de sous-couche et de bande de roulement en amont de l'orifice d'extrusion aval.

L'insert de mélange caoutchouteux électriquement conducteur crée une séparation transversale de la sous couche et de la bande de roulement.

L'invention s'intéresse également à la fabrication de profilés complexes destinés en particulier à former la bande de roulement d'un pneumatique.

Il peut s'avérer utile dans certaines conditions de réaliser des bandes de roulement dans lesquelles des éléments de profilés se juxtaposent transversalement sans se superposer, et dans lesquelles lesdits éléments de profilés sont formés alternativement d'un premier mélange et d'un deuxième mélange.

La machine de coextrusion selon l'invention a pour objet de proposer une tête d'extrusion particulièrement adaptée pour réaliser une bande de roulement telle que décrite ci-dessus.

Ladite machine de coextrusion, dans laquelle les éléments de profilés progressent dans une cavité d'extrusion selon un sens d'extrusion allant de l'amont vers l'aval en définissant une direction longitudinale, comprend :

- un rouleau cylindrique, mobile en rotation autour d'un axe, comportant une paroi radialement externe,
- une tête d'extrusion comprenant une paroi radialement inférieure de forme concave de profil cylindrique de même axe que l'axe du rouleau s'étendant transversalement, délimitant avec la paroi radialement externe du rouleau ladite cavité d'extrusion et, en progressant de l'amont vers l'aval de ladite paroi inférieure dans la direction longitudinale :

  ∘ un bloc d'extrusion amont du premier mélange comportant un canal d'extrusion amont, placé en sortie d'une extrudeuse amont, et débouchant dans la paroi inférieure,
  ∘ une lame de profilage amont, disposée transversalement en aval du canal d'extrusion amont définissant avec la paroi radialement externe du rouleau un entrefer pour déterminer des premiers éléments de profilé transversal formés du premier mélange,
  ∘ un bloc d'extrusion aval du second mélange comportant un canal d'extrusion aval, placé en sortie d'une extrudeuse aval, et débouchant dans la paroi inférieure en aval de la lame de profilage amont,
  ∘ une lame de profilage aval disposée transversalement en aval du canal d'extrusion aval définissant avec la paroi radialement externe du rouleau un entrefer pour déterminer un profil transversal du profilé complexe,

La machine de coextrusion se caractérise en ce que la tête d'extrusion supporte des racleurs s'étendant longitudinalement entre l'entrée du canal d'extrusion amont et la lame de profilage amont en divisant le canal d'extrusion amont en sous-canaux, et en ce que lesdits racleurs comportent une paroi radialement interne venant en appui sur la paroi radialement externe du rouleau de telle sorte que :

- le flux du premier mélange (M1) soit fractionné en flux secondaires dans les différents sous-canaux d'extrusion amont (310) pour alimenter l'entrefer qui est défini par la lame de profilage amont (32) et la paroi radialement externe (11) du rouleau (10) au niveau des intervalles situés transversalement au droit desdits sous-canaux (310) afin de former les premiers éléments de profilés ($P1_1$, $P1_2$, $P1_3$, $P1_4$), tandis que, au droit des racleurs (7), ledit entrefer n'est pas alimenté par ledit premier mélange (M1) et laisse ainsi des espaces vides entre les premiers éléments de profilés et que,
- le flux de second mélange (M2) provenant du canal d'extrusion aval (41) vienne nourrir ces espaces laissés vides pour former des seconds éléments de profilés ($P2_1$, $P2_2$, $P2_3$, $P2_4$) au niveau de la lame de profilage aval (42).

En prenant appui sur le rouleau, les racleurs privent le premier mélange de la possibilité de se répandre dans la direction transversale en sortie du premier canal d'extrusion, de sorte que seuls les intervalles disposés entre les racleurs et formant les sous-canaux nourrissent la lame de profilage amont au niveau de laquelle sont obtenus les premiers éléments de profilés formés du premier mélange. Les espaces disposés transversalement en aval des racleurs sont nourris en aval de la première lame de profilage par le deuxième mélange provenant du deuxième canal d'extrusion. Dans ces espaces, le second mélange vient donc au contact direct de la paroi radialement externe du rouleau et ne se superpose pas au premier mélange.

Le premier et le deuxième mélange progressent alors ensemble vers la lame de profilage aval pour former le profilé complexe comprenant les éléments de profilés formés alternativement du premier et du deuxième mélange.

La machine de coextrusion selon l'invention peut aussi comprendre isolément, ou en combinaison, les caractéristiques suivantes :

- Les racleurs sont formés d'une matière dont la dureté est inférieure à la dureté de la matière formant la paroi radialement externe du rouleau.
- Les racleurs sont formés d'un matériau de type polyamide chargé de bisulfure de molybdène.
- Les racleurs sont connectés de manière coulissante sur la tête d'extrusion par l'intermédiaire d'au moins un boulon, et au moins un élément élastique est interposé entre le racleur et la tête d'extrusion, de sorte que la paroi radialement interne du racleur exerce une pression constante sur la paroi radialement externe du rouleau.
- L'élément élastique est un ressort, une lame d'acier ou une rondelle de type « Belleville ».
- La lame de profilage aval comprend au moins une saillie s'étendant vers l'intérieur de la cavité d'extrusion et destinée à former un sillon longitudinal continu dans le profilé complexe, et dans laquelle le canal d'extrusion aval comprend un élément séparateur s'étendant longitudinalement entre la lame de profilage amont et la lame de profilage aval dans le prolongement longitudinal de ladite saillie en divisant le canal d'extrusion aval en sous- canaux.
- Les éléments séparateurs sont disposés transversalement dans les intervalles définis entre les positions transversales des racleurs.
- La tête d'extrusion comporte au moins un chenal, formé par des parois latérales s'étendant dans la direction longitudinale entre la lame de profilage amont et la lame de profilage aval, et par une paroi constituant le fond du chenal, lesdites parois formant ensemble une surface concave ouverte radialement vers l'intérieur et définissant un conduit ouvert à ses deux extrémités longitudinales, les parois latérales du chenal étant formées par la paroi latérale de l'élément séparateur et par la paroi latérale d'une cloison.
- La section transversale S d'un chenal par un plan perpendiculaire à la direction longitudinale décroît de façon continue en circulant de l'extrémité amont du chenal jusqu'à l'extrémité aval du chenal, de sorte que ladite section est minimale au niveau de ladite extrémité aval du chenal.
- Au niveau de l'extrémité aval du chenal, la section transversale du chenal par un plan perpendiculaire à la direction longitudinale a une forme triangulaire.

L'invention concerne également le procédé de réalisation d'un profilé complexe comprenant des éléments de profilés qui se juxtaposent transversalement sans se superposer, lesdits éléments de profilés étant formés alternativement d'un premier mélange et d'un deuxième mélange de caoutchouc, dans lequel on réalise ledit profilé à l'aide d'une machine de coextrusion selon une des caractéristiques précédentes.

Ainsi que le procédé de fabrication d'un profilé complexe, comprenant un premier élément de profilé formé de l'assemblage d'un composant élémentaire de profilé disposé dans le fond d'un sillon, et au moins un composant élémentaire formé d'un élément de renfort d'une des parois latérales d'un sillon longitudinal, dans lequel on réalise ledit profilé à l'aide d'une machine de coextrusion selon une la caractéristique précédente.

**Brève description des dessins**

L'invention sera mieux comprise à la lecture des figures annexées, qui sont fournies à titre d'exemples et ne présentent aucun caractère limitatif, dans lesquelles :

- La figure 1 représente une section transversale d'un profilé complexe selon un art antérieur connu.

- La figure 2 représente une vue transversale schématique d'une machine d'extrusion.

- La figure 3 représente une section transversale d'un profilé complexe obtenu avec la machine de coextrusion selon l'invention.

- La figure 4 représente de manière schématique une vue en perspective d'une tête d'extrusion selon l'invention.

- La figure 5 représente une vue de détail de la tête d'extrusion illustrée dans le médaillon de la figure 4.

- La figure 6 représente une vue en coupe transversale du racleur.

- La figure 7 représente une section transversale d'un profilé complexe selon une alternative de réalisation de l'invention.

- La figure 8 représente de manière schématique une vue en perspective d'une tête d'extrusion pour la réalisation du profilé complexe illustré à la figure 7.

- La figure 9 représente une vue de détail de la tête d'extrusion illustrée dans le médaillon de la figure 8.

**Description détaillée**

La machine de coextrusion 1 représentée à la figure 2 comprend un rouleau cylindrique 10 entraîné en rotation autour d'un axe 12 par un ensemble moteur (non représenté). Les génératrices du rouleau s'étendent selon une direction transversale DT et forment une paroi d'extrusion définie ici par la paroi radialement externe 11 du rouleau 10.

La machine de coextrusion 1 comprend également une tête d'extrusion 2 comportant un bloc d'extrusion amont 3 qui est associé à une extrudeuse amont 30 fournissant un premier mélange de caoutchouc M1, et un bloc d'extrusion aval 4 qui est associé à une extrudeuse aval 40 fournissant un second mélange de caoutchouc M2.

Le profilé complexe PC est dirigé dans la direction longitudinale DL vers la partie aval de la machine d'extrusion sur un tapis d'évacuation 13.

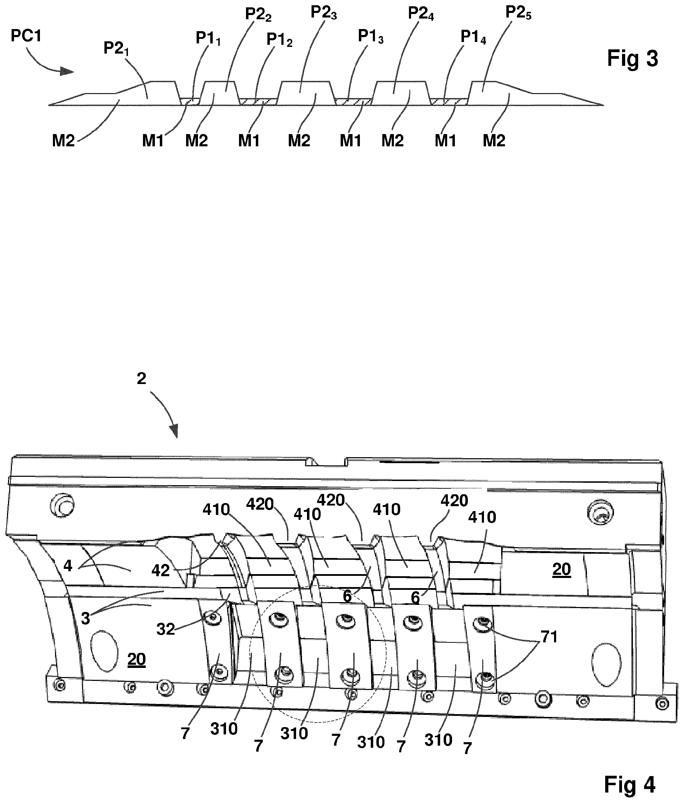

Le profilé complexe PC1 illustré à la figure 3 comprend des premiers éléments de profilés $P1_1$, $P1_2$, $P1_3$, $P1_4$ formés d'un premier mélange de caoutchouc M1, intercalés entre des seconds éléments de profilés $P2_1$, $P2_2$, $P2_3$, $P2_4$, $P2_5$ formés d'un deuxième mélange de caoutchouc. Les premiers éléments de profilés et les deuxièmes éléments de profilés se juxtaposent dans la direction transversale sans se superposer selon la direction radiale.

Les éléments de profilés $P1_1$, $P1_2$, $P1_3$, $P1_4$ du profilé complexe PC1 sont disposés dans le fond de la partie du profilé destiné à former les sillons longitudinaux, et les éléments de profilés $P2_1$, $P2_2$, $P2_3$, $P2_4$, $P2_5$ sont disposés sur la partie du profilé destiné à former les cordons longitudinaux de la bande de roulement venant en contact direct avec le sol.

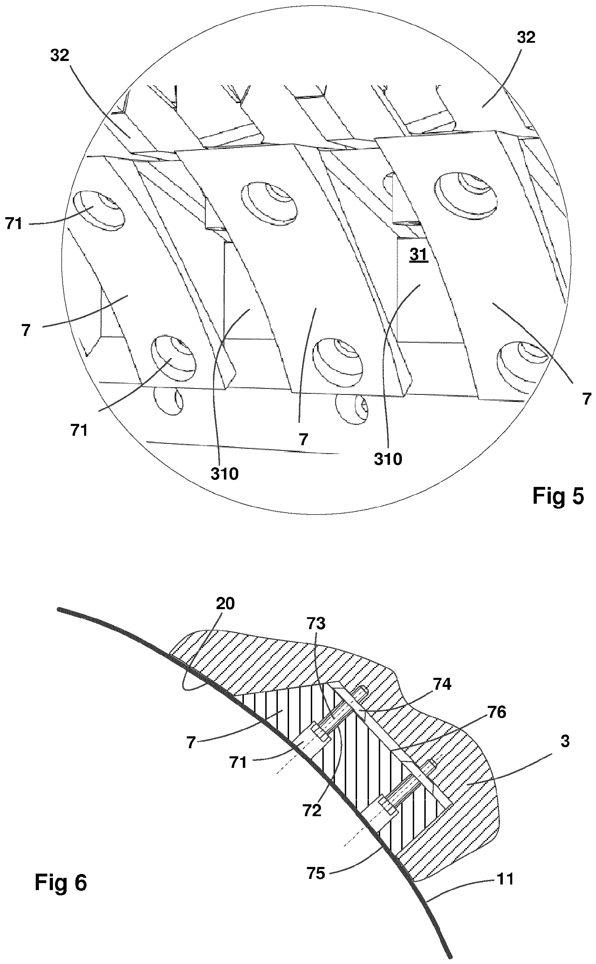

Les figures 4 et 5 illustrent de manière plus détaillée la tête d'extrusion 2.

La paroi inférieure radialement interne 20 de la tête d'extrusion 2 a une forme générale cylindrique d'axe 12 qui est placée en vis-à-vis de la paroi radialement externe 11 du rouleau 10. L'espace compris entre la paroi inférieure 20 et la paroi radialement externe 11 du rouleau 10 forme une cavité d'extrusion dans laquelle le mélange sous pression est mis en forme en passant dans les entrefers définis successivement par une lame de profilage amont 32 puis une lame de profilage aval 42 et la paroi radialement externe 11 du rouleau 10.

La distance radiale entre les deux parois 11 et 20, au niveau des deux extrémités transversales, est de l'ordre de quelques dixièmes de millimètres pour limiter les fuites de mélange de caoutchouc.

Le rouleau 10 améliore l'entraînement du profilé complexe en cours d'extrusion dans la direction longitudinale DL, et permet en particulier de réduire les effets de bord au niveau de la semelle du profilé complexe en contact avec la paroi radialement externe 11 du rouleau.

Le sens de rotation R du rouleau détermine le sens de progression du profilé dans la cavité d'extrusion de la machine, lequel est assimilé à la direction longitudinale DL. La direction radiale DR correspond donc à une direction localement perpendiculaire à la direction transversale DT et à la direction longitudinale DL, et le sens radialement dirigé vers l'intérieur ou radialement interne correspond à une orientation vers l'intérieur de la cavité d'extrusion. Ainsi, lorsqu'un premier point est placé dans une position radialement inférieure par rapport à un second point, on entend que la valeur de la distance entre le premier point et le second point selon une direction radiale croissante, est positive.

L'extrudeuse amont 30 (non représentée), montée sur le bloc d'extrusion amont, et dans laquelle est travaillé le premier mélange M1, débouche dans la paroi inférieure 20 par un canal d'extrusion amont 31 en amont (dans le sens de la direction longitudinale DL) d'une lame de profilage amont 32.

Des racleurs 7, ici au nombre de cinq sur la figure 4, sont fixés sur la tête d'extrusion 2 entre l'entrée du canal d'extrusion amont 31 et la lame de profilage amont 32. Ces racleurs 7 divisent le canal d'extrusion amont 31 en sous-canaux 310, ici au nombre de quatre.

Les racleurs viennent en appui sur la paroi radialement externe 11 du rouleau 10.

La lame de profilage amont 32, dont le profil transversal est adapté pour constituer les premiers éléments de profilé $P1_1$, $P1_2$, $P1_3$, $P1_4$, forme un entrefer avec la paroi radialement externe 11 du rouleau 10.

L'extrudeuse aval 40 (non représentée), montée sur le bloc d'extrusion aval, et dans laquelle est travaillé le mélange M2, débouche par un canal d'extrusion aval 41 dans la paroi intérieure 20, en aval de la lame de profilage amont 31 et en amont d'une lame de profilage aval 42.

La tête d'extrusion 2 comprend des éléments séparateurs 6, disposés dans le prolongement longitudinal d'une saillie 420 de la lame de profilage aval 42, et s'étendant depuis la lame de profilage amont 32 jusqu'à la lame de profilage aval 42. Ces éléments séparateurs 6 divisent ledit second canal d'extrusion 41 en sous-canaux 410.

Préférentiellement les éléments séparateurs sont disposés transversalement dans les intervalles définis entre les positions transversales des éléments séparateurs. Et les racleurs 7 sont disposés transversalement au droit des sous-canaux 410.

Toutefois, cet arrangement tel qu'illustré à la figure 4 servant de base à la présente description n'est pas limitatif, et il est tout à fait possible de mettre en oeuvre l'invention en modifiant la disposition des racleurs et des éléments séparateurs selon les profils complexes désirés.

Le flux de mélange M1 provenant du canal d'extrusion amont 31 est fractionné en flux secondaires dans les différents sous-canaux d'extrusion amont 310. Les racleurs empêchent le mélange M1 de s'étendre dans la direction transversale. L'entrefer défini par la lame de profilage amont 32 et la paroi radialement externe 11 du rouleau 10 est donc alimenté en mélange M1 au niveau des seuls intervalles situés transversalement au droit des sous-canaux 310 pourformer les premiers éléments de profilés $P1_1$, $P1_2$, $P1_3$, $P1_4$.

L'entrefer défini par la lame de profilage amont 32 et la paroi radialement externe 11 du rouleau 10 et disposé au droit des racleurs n'est pas alimenté et laisse des espaces vides entre les premiers éléments de profilés

En sortie de la lame de profilage amont 32, le flux de mélange M2 provenant du canal d'extrusion aval 41 divisé en sous-canaux 410 vient nourrir cet espace laissé libre pour former les seconds éléments de profilés $P2_1$, $P2_2$, $P2_3$, $P2_4$, $P2_5$ au niveau de la lame de profilage aval 42. Ces seconds éléments de profilés $P2_1$, $P2_2$, $P2_3$, $P2_4$, $P2_5$ ont leur semelle radialement interne en contact direct avec la paroi de profilage 11 et ne se superposent pas aux premiers éléments de profilés $P1_1$, $P1_2$, $P1_3$, $P1_4$.

L'entrefer entre la lame de profilage aval 42 et la surface radialement externe 11 du rouleau 10 sert à déterminer le profil transversal du profilé PC1 et à parfaire la mise en joint des éléments de profilés.

La figure 6 illustre plus en détail le montage d'un racleur sur le bloc d'extrusion amont 3 de la tête d'extrusion 2.

Chaque racleur 7 est connecté de manière coulissante sur la tête d'extrusion 2 par l'intermédiaire d'au moins un boulon 73 disposé dans un lamage 71 comportant un trou traversant 72 dans lequel circule le boulon 73.

Un élément élastique 74 est interposé entre la paroi radialement externe 76 du racleur 7 et la tête d'extrusion 3. Lorsque le racleur 7 vient en appui sur la paroi radialement externe 11 du rouleau 10, l'élément élastique 74 est calibré pour que la paroi radialement interne 75 du racleur exerce une pression constante sur la paroi radialement externe 11 du rouleau 10.

L'élément élastique illustré à la figure 6 est une rondelle de type « Belleville », mais tout autre moyen peut convenir tel qu'un ressort, une lame d'acier en compression.

Bien évidemment, le racleur peut être monté sur la tête d'extrusion sans liaison élastique.

Pour éviter les phénomènes d'usure lié au frottement du racleur sur la paroi radialement externe 11 du rouleau 10, on choisira de réaliser le racleur dans un matériau dont la dureté est inférieure à la dureté du rouleau.

A titre d'exemple, un matériau Polyamide 66 chargé en bisulfure de molybdène ($M_O$S2), commercialisé sous la marque NYLATRON ®, de dureté Rockwell HRM 80 (ISO 2039-2) offre de bons résultats pour un tambour réalisé en fonte d'aluminium dont la dureté Rockwell HRE 980 (ISO 6508-1) est très supérieure à celle du racleur 7. Lorsque le racleur présente des signes d'usure prononcés, il est facile et peu coûteux de procéder à son remplacement.

L'invention s'intéresse également à la fabrication de profilés complexes comprenant un ou plusieurs inserts et destinés à former la bande de roulement d'un pneumatique. Ces bandes de roulement d'un type nouveau, qui sont décrites par exemple dans la publication WO2016/202703, comprennent des éléments d'amarrage destinés à renforcer les blocs de structure en cas de sollicitation transversale du pneumatique.

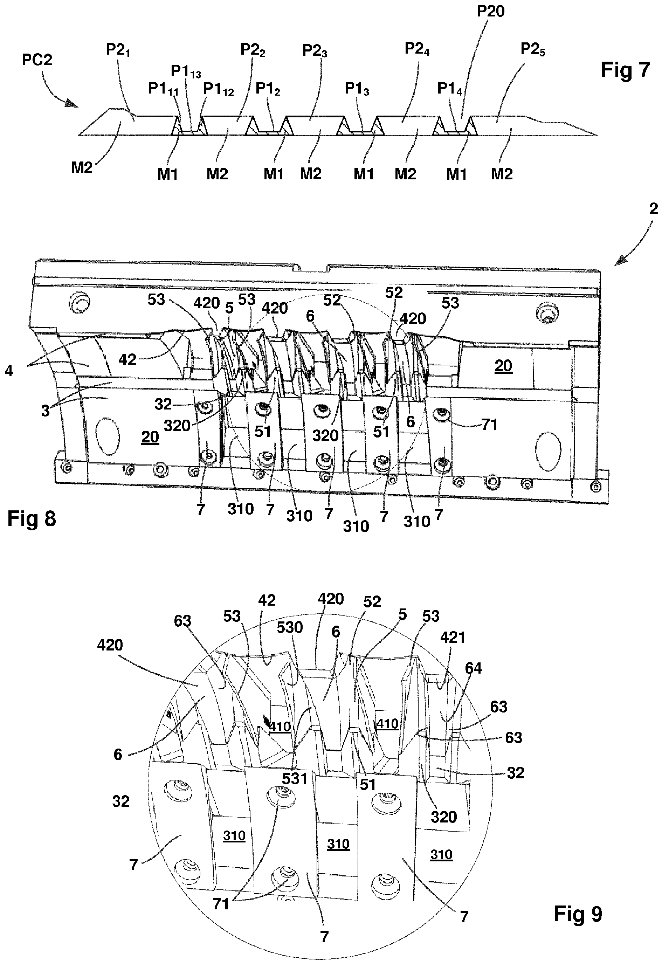

Un profilé complexe PC2 du type ci-dessus est illustré à la figure 7. Les premiers éléments de profilé $P1_1$, $P1_2$, $P1_3$, $P1_4$, constitués du mélange M1, sont formés de l'assemblage de composants élémentaires de profilé $P1_{13}$ et d'au moins un élément de renfort longitudinal $P1_{11}$, $P1_{12}$ formant une des parois latérales du sillon longitudinal P20. Ces éléments de renfort longitudinaux, s'élevant dans la direction radiale jusqu'à la surface radialement externe du profilé complexe PC2, forment lesdits inserts, ici de forme triangulaire.

La tête d'extrusion 2 illustrée à la figure 8 ou à la figure 9 représente une alternative de réalisation de l'invention, particulièrement bien adaptée pour la fabrication de ce profilé complexe PC2.

La tête d'extrusion 2 selon cette alternative de réalisation, comprend au moins un chenal 5 s'étendant dans la direction longitudinale. Ce chenal 5 se présente sous la forme d'un canal de section sensiblement triangulaire ou trapézoïdale comprenant :

- une paroi latérale 530 supportée par une cloison 53, et disposée en vis-à-vis de la paroi latérale 63 d'un élément séparateur 6 et,
- une paroi 531 formant le fond du chenal.

Les parois 63, 530 et 531 forment ensemble une surface concave continue, ouverte radialement vers l'intérieur et dont la concavité fait face à la paroi radialement externe 11 du rouleau 10. Les parois 63, 530 et 531 du chenal 5 définissent en quelque sorte un conduit, à l'image d'une gouttière ou d'une coque renversée ouverte à ses deux extrémités amont 51 et aval 52.

Les parois 63, 530, 531 du chenal 5 qui traversent longitudinalement de part en part la sortie du canal d'extrusion aval 41 depuis la sortie de la lame de profilage amont 32 jusqu'à l'entrée de la lame de profilage aval 42 ont ainsi pour objet d'isoler le chenal 5 du canal d'extrusion aval 41. La hauteur radiale des parois 51 et 52 est ajustée de sorte que le mélange M1 provenant du canal d'extrusion amont 31 et pénétrant dans le chenal 5 puisse circuler dans le chenal depuis le flanc aval 321 de lame de profilage amont 31 jusqu'au le flanc amont (non visible) de la lame de profilage aval 42 sans être mis en contact avec le second mélange M2 provenant du canal d'extrusion aval 41, tout en restant en continuité de matière avec le premier mélange M1.

Le chenal 5 dans lequel circule la part du premier mélange M1 destiné à former l'insert P10 enjambe la sortie du canal d'extrusion aval 41 et va directement de la sortie de la lame de profilage amont 32 à la lame de profilage aval 42 sans entrer en contact avec le second mélange M2 provenant dudit canal d'extrusion aval 41.

En débouchant puis en circulant dans le canal d'extrusion aval 41, le mélange M2 circule sur le dos radialement extérieur du chenal 5 formé par les parois externes convexes du chenal 5 jusqu'à l'entrée de la lame de profilage aval 42 sans venir en contact avec le mélange M1 circulant dans le chenal 5.

Au niveau de l'extrémité amont 51 du chenal 5, la cloison 53 est raccordée avec le flanc aval 321 de la lame de profilage amont 32, et le bord radialement inférieur de la cloison 53 affleure avec le profil de la lame de profilage amont 32. La lame de profilage amont 32 présente, au niveau de cette extrémité amont 51 du chenal 5, un profil transversal en forme d'exutoire 320, dont la partie aval est disposée en continuité de la paroi 531 formant le fond du chenal, de manière à favoriser l'écoulement du mélange M1 dans le chenal 5.

Au niveau de la saillie 420 de la lame de profilage aval 42, la paroi radialement interne 421 de la saillie, est placée à la même position radiale que la paroi radialement interne 64 de l'élément séparateur 6. Cette paroi 64 se prolonge en amont de ladite saillie 420 et, au niveau de son raccordement avec la lame de profilage amont 32, occupe la même position radiale que la paroi de la lame de profilage amont 32.

Au niveau de l'extrémité aval 52 du chenal 5, la paroi 531 formant le fond du chenal 5 est disposée radialement au même niveau que la position radiale à ce niveau de la lame de profilage aval 42. En revanche, au niveau de cette extrémité aval 52, la cloison 53 s'étend radialement vers l'intérieur, en vis-à-vis et au même niveau que la paroi latérale 63 de l'élément séparateur 6.

Toutefois, s'il n'est pas nécessaire de faire émerger l'insert au niveau de la surface de la bande de roulement, il est tout à fait possible, au niveau de l'extrémité aval 52 du chenal 5, de disposer la paroi 531 formant le fond du chenal 5 à une position radialement inférieure à celle de la position radiale de la lame de profilage aval 42.

Ainsi, la partie de mélange M1 pénétrant dans le chenal 5 et destinée à former le composant élémentaire de renfort $P1_{11}$ et/ou $P1_{12}$ s'écoule directement depuis l'extrémité amont 51 jusqu'à l'extrémité aval 52 sans être mise en contact avec le mélange M2, tout en restant en continuité de matière avec le mélange M1 formant le composant élémentaire de profilé $P1_{13}$ d'un premier élément de profilé ($P1_1$, $P1_2$, $P1_3$, $P1_4$) en raison de l'ouverture de la concavité du chenal radialement vers l'intérieur. La mise en forme de cette partie du premier mélange M1 pénétrant dans le chenal 5 se poursuit tout au long de sa progression dans le chenal.

La mise en joint des mélanges M1 et M2 s'effectue alors au niveau de l'entrée de la lame de profilage aval 42. Il en résulte que les adaptations de pression observées au niveau du raccordement du flux de mélange M2 avec le flux de mélange M1, n'entraînent aucune perturbation du profil conféré au mélange M1 ayant pénétré dans le chenal 5 et destiné à former le composant élémentaire $P1_{11}$ ou $P1_{12}$ d'un premier élément de profilé $P1_1$, $P1_2$, $P1_3$, $P1_4$.

Comme cela est illustré schématiquement à la figure 6, la forme de la section de sortie 52 est donnée par les positions respectives de la paroi latérale 530 de la cloison et de la paroi latérale 63 de l'élément séparateur. La forme sensiblement triangulaire correspond à une forme préférentielle de réalisation de l'insert. Toutefois, la forme de cette section n'est pas limitative et peut être adaptée à volonté.

Enfin, de manière avantageuse, l'évolution de la pression dans le chenal 5 peut être contrôlée en ajustant, par rapport à la direction longitudinale DL, l'angle formé entre la paroi latérale 530 et la paroi latérale 63 de l'élément séparateur. Préférentiellement, ces parois disposées en vis-à-vis convergent l'une vers l'autre, en allant de l'amont vers l'aval, en faisant un angle de l'ordre de 5° avec la direction longitudinale, de sorte que la section transversale du chenal par un plan radial décroît de manière continue en allant de l'extrémité amont 51 vers l'extrémité aval 52 du chenal, et que ladite section est minimale au niveau de l'extrémité aval 52. En d'autres termes, le gradient de la section S du chenal en fonction de la distance $l$ longitudinale allant de l'amont vers l'aval est négatif, ($\partial S/\partial l$ <0).

## NOMENCLATURE

| | |
|---|---|
| 1 | Machine de coextrusion. |
| 10 | Rouleau |
| 11 | Paroi radialement externe du rouleau. |
| 12 | Axe de rotation du rouleau. |
| 13 | Tapis d'évacuation. |
| 2 | Tête d'extrusion. |
| 20 | Paroi inférieure. |
| 3 | Bloc d'extrusion amont. |
| 30 | Extrudeuse amont. |
| 31 | Canal d'extrusion amont. |
| 310 | Sous-canal d'extrusion amont. |
| 32 | Lame de profilage amont. |
| 320 | Exutoire. |
| 4 | Bloc d'extrusion aval. |
| 40 | Extrudeuse aval. |
| 41 | Canal d'extrusion aval. |
| 410 | Sous-canal d'extrusion aval. |
| 42 | Lame de profilage aval. |
| 420 | Saillie. |
| 5 | Chenal |
| 51 | Extrémité amont du chenal. |
| 52 | Extrémité aval du chenal. |
| 53 | Cloison. |
| 530 | Paroi latérale de la cloison formant le chenal. |
| 531 | Paroi formant le fond du chenal. |
| 6 | Élément séparateur. |
| 63 | Paroi latérale de l'élément séparateur. |
| 64 | Paroi radialement interne de l'élément séparateur. |
| 7 | Racleur. |
| 71 | Lamage. |
| 72 | Trou traversant. |
| 73 | Boulon de fixation. |
| 74 | Elément élastique ; Rondelle Belleville. |
| 75 | Paroi radialement interne du racleur |
| 76 | Paroi radialement externe du racleur. |
| R | Sens de rotation du rouleau. |
| DT | Direction transversale. |
| DL | Direction longitudinale ; Sens de progression. |
| DR | Direction radiale. |
| PC0, PC1, PC2 | Profilé complexe. |
| P1 | Premier profilé (sous couche). |
| $P1_1$, $P1_2$, $P1_3$, $P1_4$ | Premiers éléments de profilé. |

| | |
|---|---|
| $P1_{11}$, $P1_{12}$, $P1_{13}$, | Composants élémentaires de l'élément de profilé $P1_1$. |
| P2 | Second profilé (bande de roulement). |
| $P2_1$, $P2_2$, $P2_3$, $P2_4$, $P2_5$ | Deuxièmes éléments de profilé. |
| P20 | Sillon longitudinal. |
| P21 | Cordon longitudinal. |
| M1 | Premier mélange de caoutchouc |
| M2 | Second mélange de caoutchouc. |

**Revendications**

1.  Machine de coextrusion (1) pour la fabrication d'un profilé complexe dans lequel des éléments de profilés se juxtaposent transversalement sans se superposer, lesdits éléments de profilés étant formés alternativement d'un premier mélange (M1) et d'un deuxième mélange (M2) de caoutchouc, dans laquelle les éléments de profilés progressent dans une cavité d'extrusion selon un sens d'extrusion allant de l'amont vers l'aval en définissant une direction longitudinale (DL), comprenant :

    - un rouleau cylindrique (10), mobile en rotation autour d'un axe (12), comportant une paroi radialement externe (11),
    - une tête d'extrusion comprenant une paroi radialement inférieure (20) de forme concave de profil cylindrique de même axe que l'axe du rouleau (12) s'étendant transversalement, délimitant avec la paroi radialement externe du rouleau ladite cavité d'extrusion et, en progressant de l'amont vers l'aval de ladite paroi inférieure (20) dans la direction longitudinale :

        ◦ un bloc d'extrusion amont (3) du premier mélange (M1) comportant un canal d'extrusion amont (31), placé en sortie d'une extrudeuse amont (30), et débouchant dans la paroi inférieure (20),
        ◦ une lame de profilage amont (32), disposée transversalement en aval du canal d'extrusion amont (31) définissant avec la paroi radialement externe du rouleau un entrefer pour déterminer des premiers éléments de profilé transversal ($P1_1$, $P1_2$, $P1_3$, $P1_4$) formés du premier mélange (M1),
        ◦ un bloc d'extrusion aval (4) du second mélange (M2) comportant un canal d'extrusion aval (41), placé en sortie d'une extrudeuse aval (40), et débouchant dans la paroi inférieure (20) en aval de la lame de profilage amont (32),
        ◦ une lame de profilage aval (42) disposée transversalement en aval du canal d'extrusion aval (41) définissant avec la paroi radialement externe du rouleau un entrefer pour déterminer un profil transversal du profilé complexe (PC),

    **caractérisé en ce que** la tête d'extrusion supporte des racleurs (7) s'étendant longitudinalement entre l'entrée du canal d'extrusion amont (31) et la lame de profilage amont (32) en divisant le canal d'extrusion amont (31) en sous-canaux (310), et **en ce que** lesdits racleurs comportent une paroi radialement interne (75) venant en appui sur la paroi radialement externe (11) du rouleau (1) de telle sorte que :

    - le flux du premier mélange (M1) soit fractionné en flux secondaires dans les différents sous-canaux d'extrusion amont (310) pour alimenter l'entrefer qui est défini par la lame de profilage amont (32) et la paroi radialement externe (11) du rouleau (10) au niveau des intervalles situés transversalement au droit desdits sous-canaux (310) afin de former les premiers éléments de profilés ($P1_1$, $P1_2$, $P1_3$, $P1_4$), tandis que, au droit des racleurs (7), ledit entrefer n'est pas alimenté par ledit premier mélange (M1) et laisse ainsi des espaces vides entre les premiers éléments de profilés et que,
    - le flux de second mélange (M2) provenant du canal d'extrusion aval (41) vienne nourrir ces espaces laissés vides pour former des seconds éléments de profilés ($P2_1$, $P2_2$, $P2_3$, $P2_4$) au niveau de la lame de profilage aval (42).

2.  Machine de coextrusion (1) selon la revendication 1, dans lequel les racleurs (7) sont formés d'une matière dont la dureté est inférieure à la dureté de la matière formant la paroi radialement externe (11) du rouleau (10).

3.  Machine de coextrusion (1) selon la revendication 2, dans laquelle les racleurs (7) sont formés d'un matériau de type polyamide chargé de bisulfure de molybdène.

4.  Machine de coextrusion (1) selon l'une quelconque des revendications précédentes, dans laquelle les racleurs (7) sont connectés de manière coulissante sur la tête d'extrusion (2) par l'intermédiaire d'au moins un boulon (73), et dans laquelle au moins un élément élastique (74) est interposé entre le racleur et la tête d'extrusion, de sorte que la paroi radialement interne (75) du racleur exerce une pression constante sur la paroi radialement externe (11) du rouleau (10).

5. Machine de coextrusion (1) selon la revendication 4, dans laquelle l'élément élastique (74) est un ressort, une lame d'acier ou une rondelle de type « Belleville ».

6. Machine de coextrusion (1) selon l'une quelconque des revendications 1 à 5, dans laquelle la lame de profilage aval (42) comprend au moins une saillie (420) s'étendant radialement vers l'intérieur de la cavité d'extrusion et destinée à former un sillon longitudinal (P20) continu dans le profilé complexe (PC), et dans laquelle le canal d'extrusion aval (41) comprend un élément séparateur (6) s'étendant longitudinalement entre la lame de profilage amont (32) et la lame de profilage aval (42) dans le prolongement longitudinal de ladite saillie (420) en divisant le canal d'extrusion aval (41) en sous-canaux (410).

7. Machine de coextrusion (1) selon la revendication 6, dans laquelle les éléments séparateurs (6) sont disposés transversalement dans les intervalles définis entre les positions transversales des racleurs (7).

8. Machine de coextrusion (1) selon la revendication 7, dans laquelle la tête d'extrusion comporte au moins un chenal (5), formé par des parois latérales (530, 63) s'étendant dans la direction longitudinale entre la lame de profilage amont (32) et la lame de profilage aval (42), et par une paroi (531) constituant le fond du chenal, lesdites parois (530, 63, 531) formant ensemble une surface concave ouverte radialement vers l'intérieur et définissant un conduit ouvert à ses deux extrémités longitudinales (51, 52), et dans laquelle les parois latérales du chenal (5) sont formées par la paroi latérale (63) de l'élément séparateur (6) et par la paroi latérale (530) d'une cloison (53).

9. Machine de coextrusion (1) selon la revendication 8, dans laquelle la section transversale S d'un chenal par un plan perpendiculaire à la direction longitudinale décroît de façon continue en circulant de l'extrémité amont (51) du chenal jusqu'à l'extrémité aval (52) du chenal ( $\frac{\partial S}{\partial l} < 0$ ), de sorte que ladite section est minimale au niveau de ladite extrémité aval (52) du chenal (5).

10. Machine de coextrusion (1) selon la revendication 8 ou la revendication 9, dans laquelle, au niveau de l'extrémité aval (52) du chenal, la section transversale du chenal (5) par un plan perpendiculaire à la direction longitudinale (DL) a une forme triangulaire.

11. Procédé de réalisation d'un profilé complexe (PC1) comprenant des éléments de profilés (P1$_1$, P1$_2$, P1$_3$, P1$_4$ et P2$_1$, P2$_2$, P2$_3$, P2$_4$, P2$_5$) qui se juxtaposent transversalement sans se superposer, lesdits éléments de profilés étant formés alternativement d'un premier mélange (M1) et d'un deuxième mélange (M2) de caoutchouc, dans lequel on réalise ledit profilé à l'aide d'une machine de coextrusion selon l'une des revendications 1 à 10.

12. Procédé de fabrication selon la revendication 11 d'un profilé complexe (PC2), comprenant un premier élément de profilé (P1$_1$, P1$_2$, P1$_3$, P1$_4$) formé de l'assemblage d'un composant élémentaire de profilé (P1$_{13}$) disposé dans le fond d'un sillon (P20), et au moins un composant élémentaire (P1$_{11}$, P1$_{12}$) formé d'un élément de renfort d'une des parois latérales d'un sillon longitudinal (P20), dans lequel on réalise ledit profilé à l'aide d'une machine de coextrusion selon l'une des revendications 6 à 10.

**Patentansprüche**

1. Koextrusionsmaschine (1) zur Herstellung eines komplexen Profils, bei dem Profilelemente in Querrichtung nebeneinanderliegen, ohne sich zu überlappen, wobei die Profilelemente abwechselnd aus einer ersten Mischung (M1) und einer zweiten Mischung (M2) aus Kautschuk gebildet werden, wobei sich die Profilelemente in einem Extrusionshohlraum in einer Extrusionsrichtung von stromaufwärts nach stromabwärts bewegen und dabei eine Längsrichtung (DL) definieren, umfassend:

- eine zylindrische Walze (10), die um eine Achse (12) drehbar ist und eine radial äußere Wand (11) aufweist,
- einen Extrusionskopf, der eine radial untere Wand (20) mit konkaver Form, zylindrischem Profil und derselben Achse wie die Achse der Walze (12) umfasst, die sich in Querrichtung erstreckt und mit der radial äußeren Wand der Walze den Extrusionshohlraum begrenzt und, von der unteren Wand (20) in Längsrichtung von stromaufwärts nach stromabwärts verlaufend:

o einen stromaufwärtigen Block (3) zur Extrusion der ersten Mischung (M1) mit einem stromaufwärtigen Extrusionskanal (31), der am Ausgang eines stromaufwärtigen Extruders (30) angeordnet ist und in die untere Wand (20) mündet,

o ein stromaufwärtiges Profiliermesser (32), das in Querrichtung stromabwärts des stromaufwärtigen Extrusionskanals (31) angeordnet ist und mit der radial äußeren Wand der Walze einen Luftspalt definiert, um erste Querprofilelemente ($P1_1$, $P1_2$, $P1_3$, $P1_4$) zu bestimmen, die aus der ersten Mischung (M1) gebildet sind,

o einen stromabwärtigen Block (4) zur Extrusion der zweiten Mischung (M2) mit einem stromabwärtigen Extrusionskanal (41), der am Ausgang eines stromabwärtigen Extruders (40) angeordnet ist und stromabwärts des stromaufwärtigen Profiliermessers (32) in die untere Wand (20) mündet,

o ein stromabwärtiges Profiliermesser (42), das in Querrichtung stromabwärts des stromabwärtigen Extrusionskanals (41) angeordnet ist und mit der radial äußeren Wand der Walze einen Luftspalt definiert, um ein Querprofil des komplexen Profils (PC) zu bestimmen, **dadurch gekennzeichnet, dass** der Extrusionskopf Abstreifer (7) trägt, die sich in Längsrichtung zwischen dem Eingang des stromaufwärtigen Extrusionskanals (31) und dem stromaufwärtigen Profiliermesser (32) erstrecken und dabei den stromaufwärtigen Extrusionskanal (31) in Unterkanäle (310) unterteilen, und dass die Abstreifer eine radial innere Wand (75) aufweisen, die an der radial äußeren Wand (11) der Walze (1) zur Anlage kommt, so dass:

- der Strom der ersten Mischung (M1) in den verschiedenen stromaufwärtigen Extrusionsunterkanälen (310) in Sekundärströme aufgeteilt wird, um den Luftspalt zu bespeisen, der durch das stromaufwärtige Profiliermesser (32) und die radial äußere Wand (11) der Walze (10) im Bereich der Zwischenräume definiert ist, die sich in Querrichtung direkt unter den Unterkanälen (310) befinden, um die ersten Profilelemente ($P1_1$, $P1_2$, $P1_3$, $P1_4$) zu bilden, während direkt unter den Abstreifern (7) der Luftspalt nicht mit der ersten Mischung (M1) bespeist wird und somit Leerräume zwischen den ersten Profilelementen hinterlässt, und so dass
- der Strom der zweiten Mischung (M2) aus dem stromabwärtigen Extrusionskanal (41) diese leergelassenen Räume bespeist, um zweite Profilelemente ($P2_1$, $P2_2$, $P2_3$, $P2_4$) im Bereich des stromabwärtigen Profiliermessers (42) zu bilden.

2. Koextrusionsmaschine (1) nach Anspruch 1, wobei die Abstreifer (7) aus einem Material gebildet sind, dessen Härte geringer ist als die Härte des Materials, das die radial äußere Wand (11) der Walze (10) bildet.

3. Koextrusionsmaschine (1) nach Anspruch 2, wobei die Abstreifer (7) aus einem Material des Polyamid-Typs, gefüllt mit Molybdändisulfid, gebildet sind.

4. Koextrusionsmaschine (1) nach einem der vorangehenden Ansprüche, wobei die Abstreifer (7) über mindestens einen Bolzen (73) gleitend mit dem Extrusionskopf (2) verbunden sind und wobei zwischen dem Abstreifer und dem Extrusionskopf mindestens ein elastisches Element (74) angeordnet ist, so dass die radial innere Wand (75) des Abstreifers einen konstanten Druck auf die radial äußere Wand (11) der Walze (10) ausübt.

5. Koextrusionsmaschine (1) nach Anspruch 4, wobei das elastische Element (74) eine Feder, ein Stahlblatt oder eine Unterlegscheibe des Belleville-Typs ist.

6. Koextrusionsmaschine (1) nach einem der Ansprüche 1 bis 5, wobei das stromabwärtige Profiliermesser (42) mindestens einen Vorsprung (420) umfasst, der sich radial in das Innere des Extrusionshohlraums erstreckt und dazu bestimmt ist, eine durchgehende Längsrille (P20) im komplexen Profil (PC) zu bilden, und wobei der stromabwärtige Extrusionskanal (41) ein Trennelement (6) umfasst, das sich in Längsrichtung zwischen dem stromaufwärtigen Profiliermesser (32) und dem stromabwärtigen Profiliermesser (42) in der Längsausdehnung des Vorsprungs (420) erstreckt und dabei den stromabwärtigen Extrusionskanal (41) in Unterkanäle (410) unterteilt.

7. Koextrusionsmaschine (1) nach Anspruch 6, wobei die Trennelemente (6) in Querrichtung in den zwischen den Querpositionen der Abstreifer (7) definierten Zwischenräumen angeordnet sind.

8. Koextrusionsmaschine (1) nach Anspruch 7, wobei der Extrusionskopf mindestens eine Rinne (5) aufweist, die durch Seitenwände (530, 63) gebildet ist, die sich in Längsrichtung zwischen dem stromaufwärtigen Profiliermesser (32) und dem stromabwärtigen Profiliermesser (42) erstrecken, und durch eine Wand (531) die den Boden der Rinne bildet, wobei die Wände (530, 63, 531) zusammen eine konkave Fläche bilden, die radial nach innen offen ist und einen an ihren beiden Längsenden (51, 52) offenen Kanal definiert, und wobei die Seitenwände der Rinne (5) durch die Seitenwand (63) des Trennelements (6) und durch die Seitenwand (530) einer Zwischenwand (53) gebildet sind.

9. Koextrusionsmaschine (1) nach Anspruch 8, wobei der Querschnitt S einer Rinne durch eine zur Längsrichtung senkrechte Ebene ausgehend vom stromaufwärtigen Ende (51) der Rinne bis zum stromabwärtigen Ende (52) der Rinne kontinuierlich abnimmt ( $\frac{\partial S}{\partial l} < 0$ ), so dass der Querschnitt im Bereich des stromabwärtigen Endes (52) der Rinne (5) minimal ist.

10. Koextrusionsmaschine (1) nach Anspruch 8 oder Anspruch 9, wobei der Querschnitt der Rinne (5) durch eine zur Längsrichtung (DL) senkrechte Ebene im Bereich des stromabwärtigen Endes (52) der Rinne eine dreieckige Form aufweist.

11. Verfahren zur Herstellung eines komplexen Profils (PC1) mit Profilelementen ($P1_1$, $P1_2$, $P1_3$, $P1_4$ und $P2_1$, $P2_2$, $P2_3$, $P2_4$, $P2_5$), die in Querrichtung nebeneinanderliegen, ohne sich zu überlappen, wobei die Profilelemente abwechselnd aus einer ersten Mischung (M1) und einer zweiten Mischung (M2) aus Kautschuk gebildet werden, wobei das Profil mit Hilfe einer Koextrusionsmaschine nach einem der Ansprüche 1 bis 10 hergestellt wird.

12. Verfahren zur Herstellung eines komplexen Profils (PC2) nach Anspruch 11, umfassend ein erstes Profilelement ($P1_1$, $P1_2$, $P1_3$, $P1_4$), das aus der Verbindung einer elementaren Profilkomponente ($P1_{13}$), die am Boden einer Rille (P20) angeordnet ist, und mindestens einer aus einem Verstärkungselement einer der Seitenwände einer Längsrille (P20) gebildeten elementaren Komponente ($P1_{11}$, $P1_{12}$) gebildet ist, wobei das Profil mit Hilfe einer Koextrusionsmaschine nach einem der Ansprüche 6 bis 10 hergestellt wird.

## Claims

1. Coextrusion machine (1) for manufacturing a complex profiled element, wherein profiled-element portions are juxtaposed transversely without being superposed, said profiled-element portions being formed alternately from a first rubber compound (M1) and a second rubber compound (M2), wherein the profiled-element portions progress through an extrusion cavity in a direction of extrusion extending from upstream to downstream, defining a longitudinal direction (DL), comprising:

   - a cylindrical roller (10) that is rotatable about an axis (12) and has a radially external wall (11),
   - an extrusion head comprising a radially lower wall (20) of concave shape with a cylindrical profile of the same axis as the transversely extending roller axis (12), delimiting said extrusion cavity with the radially external wall of the roller and, from upstream to downstream of said lower wall (20) in the longitudinal direction:

      ◦ an upstream extrusion unit (3) for extruding the first compound (M1), having an upstream extrusion canal (31), which is positioned at the outlet of an upstream extruder (30) and opens into the lower wall (20),
      ◦ an upstream profiling blade (32), which is disposed transversely downstream of the upstream extrusion canal (31) and that defines, with the radially external wall of the roller, a gap for determining first transverse profiled-element portions ($P1_1$, $P1_2$, $P1_3$, $P1_4$) formed from the first compound (M1),
      ◦ a downstream extrusion unit (4) for extruding the second compound (M2), having a downstream extrusion canal (41), which is positioned at the outlet of a downstream extruder (40) and opens into the lower wall (20) downstream of the upstream profiling blade (32),
      ◦ a downstream profiling blade (42), which is disposed transversely downstream of the downstream extrusion canal (41) and that defines, with the radially external wall of the roller, a gap for determining a transverse profile of the complex profiled element (PC),

   **characterized in that** the extrusion head supports scrapers (7) that extend longitudinally between the inlet of the upstream extrusion canal (31) and the upstream profiling blade (32), dividing the upstream extrusion canal (31) into sub-canals (310), and **in that** said scrapers have a radially internal wall (75) that bears against the radially external wall (11) of the roller (1) in such a way that:

- the stream of the first compound (M1) is split into secondary streams in the different upstream extrusion sub-canals (310) in order to feed the gap that is defined by the upstream profiling blade (32) and the radially external wall (11) of the roller (10) in the intervals situated transversely in line with said sub-canals (310) so as to form the first profiled-element portions ($P1_1$, $P1_2$, $P1_3$, $P1_4$), while, in line with the scrapers (7), said gap is not fed by said first compound (M1) and thus leaves empty spaces between the first profiled-element portions, and that
- the stream of second compound (M2) coming from the downstream extrusion canal (41) supplies these spaces that have been left empty in order to form second profiled-element portions ($P2_1$, $P2_2$, $P2_3$, $P2_4$) at the downstream profiling blade (42).

2. Coextrusion machine (1) according to Claim 1, wherein the scrapers (7) are formed of a material having a hardness lower than the hardness of the material forming the radially external wall (11) of the roller (10).

3. Coextrusion machine (1) according to Claim 2, wherein the scrapers (7) are formed of a material of the polyamide type filled with molybdenum disulfide.

4. Coextrusion machine (1) according to any one of the preceding claims, wherein the scrapers (7) are connected to the extrusion head (2) in a sliding manner via at least one bolt (73), and wherein at least one elastic element (74) is interposed between the scraper and the extrusion head such that the radially internal wall (75) of the scraper exerts a constant pressure on the radially external wall (11) of the roller (10).

5. Coextrusion machine (1) according to Claim 4, wherein the elastic element (74) is a spring, a steel blade or a "Belleville"-type washer.

6. Coextrusion machine (1) according to any one of Claims 1 to 5, wherein the downstream profiling blade (42) comprises at least one projection (420) that extends radially towards the inside of the extrusion cavity and is intended to form a continuous longitudinal furrow (P20) in the complex profiled element (PC), and wherein the downstream extrusion canal (41) comprises a separating element (6) that extends longitudinally between the upstream profiling blade (32) and the downstream profiling blade (42) in the longitudinal continuation of said projection (420), dividing the downstream extrusion canal (41) into sub-canals (410).

7. Coextrusion machine (1) according to Claim 6, wherein the separating elements (6) are disposed transversely in the intervals defined between the transverse positions of the scrapers (7).

8. Coextrusion machine (1) according to Claim 7, wherein the extrusion head has at least one channel (5) formed by lateral walls (530, 63) that extend in the longitudinal direction between the upstream profiling blade (32) and the downstream profiling blade (42), and by a wall (531) that forms the bottom of the channel, said walls (530, 63, 531) together forming a concave surface that is open radially towards the inside and defining a duct that is open at its two longitudinal ends (51, 52), and wherein the lateral walls of the channel (5) are formed by the lateral wall (63) of the separating element (6) and by the lateral wall (530) of a partition (53).

9. Coextrusion machine (1) according to Claim 8, wherein the transverse cross section S of a channel on a plane perpendicular to the longitudinal direction decreases continuously from the upstream end (51) of the channel to the downstream end (52) of the channel ( $\frac{\partial S}{\partial l} < 0$ ), such that said cross section is at a minimum at said downstream end (52) of the channel (5).

10. Coextrusion machine (1) according to Claim 8 or Claim 9, wherein, at the downstream end (52) of the channel, the transverse cross section of the channel (5) on a plane perpendicular to the longitudinal direction (DL) has a triangular shape.

11. Method for producing a complex profiled element (PC1) comprising profiled-element portions ($P1_1$, $P1_2$, $P1_3$, $P1_4$ and $P2_1$, $P2_2$, $P2_3$, $P2_4$, $P2_5$), which are juxtaposed transversely without being superposed, said profiled-element portions being formed alternately from a first rubber compound (M1) and a second rubber compound (M2), wherein said profiled element is made with the aid of a coextrusion machine according to one of Claims 1 to 10.

12. Method according to Claim 11 for manufacturing a complex profiled element (PC2) comprising a first profiled-element portion (P1i, $P1_2$, $P1_3$, $P1_4$) formed of the assembly of an elementary profiled-element component ($P1_{13}$) disposed

in the bottom of a furrow (P20) and at least one elementary component (P1$_{11}$, P1$_{12}$) formed of a reinforcing element of one of the lateral walls of a longitudinal furrow (P20), wherein said profiled element is made with the aid of a coextrusion machine according to one of Claims 6 to 10.

P2   P20  P21  M1   P21   M2   P1

PC0   DR   DL   DT   **Fig1**

**Fig 2**

DL   PC   42   4   32   2   40

13   DL   20   30   3

R   DR   11   10

1   12   DT

**Fig 3**

PC1

P2₁  P1₁  P2₂  P1₂  P2₃  P1₃  P2₄  P1₄  P2₅

M2   M1  M2  M1  M2  M1  M2  M1  M2

2

**Fig 4**

410 420 410 420 410 420 410

4  42  6  6  20

3  32  20  71

7  310  7  310  7  310  7  310  7

Fig 5

Fig 6

Fig 7

Fig 8

Fig 9

## RÉFÉRENCES CITÉES DANS LA DESCRIPTION

**Documents brevets cités dans la description**

- WO 2017109392 A1
- EP 1448355 A
- WO 2016202703 A